# EUROPÄISCHE PATENTSCHRIFT

(11) **EP 3 915 712 B1**
(45) Veröffentlichungstag und Bekanntmachung des Hinweises auf die Patenterteilung: **25.01.2023**
(21) Anmeldenummer: 21155363.1
(22) Anmeldetag: 05.02.2021
(51) Int. Cl.: B23K 11/11, B23K 11/25, B23K 31/00, B23K 31/12, G05B 19/418, G06K 9/62, G06N 3/08, G06N 5/02

(54) **VERFAHREN ZUM OPTIMIEREN VON SCHWEISSPARAMETERN FÜR EINE SCHWEISSSTEUERUNG, VERFAHREN ZUM BEREITSTELLEN EINES TRAINIERTEN ALGORITHMUS MASCHINELLEN LERNENS, SCHWEISSSTEUERUNG, COMPUTERPROGRAMM UND COMPUTERLESBARER DATENTRÄGER**
METHOD OF OPTIMIZING WELDING PARAMETERS FOR WELDING CONTROL, METHOD OF PROVIDING A TRAINED ALGORITHM FOR MACHINE LEARNING, WELDING CONTROL, COMPUTER PROGRAM AND COMPUTER-READABLE DATA MEDIUM
PROCÉDÉ D'OPTIMISATION DES PARAMÈTRES DE SOUDAGE POUR UNE COMMANDE DE SOUDAGE, PROCÉDÉ D'UTILISATION D'UN APPRENTISSAGE MACHINE ALGORITHME ENTRAÎNÉ, CONTRÔLEUR DE SOUDAGE, PROGRAMME D'ORDINATEUR, ET SUPPORT DE DONNÉES LISIBLE PAR ORDINATEUR

(30) Priorität: 08.04.2020 DE 102020204522
(43) Veröffentlichungstag der Anmeldung: 01.12.2021
(73) Patentinhaber: Robert Bosch GmbH, 70442 Stuttgart (DE)
(72) Erfinder: Dieterle, Martin, 71636 Ludwigsburg (DE); Shakirov, Damir, 75223 Niefern-Oeschelbronn (DE); Haeufgloeckner, Juergen, 63936 Schneeberg (DE); Bleier, Fabian, 70180 Stuttgart (DE); Pychynski, Tim, 76137 Karlsruhe (DE); Steimer, Andreas, 75328 Schoemberg (DE); Slavnic, Sinisa, 28357 Bremen (DE); Zhou, Baifan, 71229 Leonberg (DE); Mcconnell, Sean, 69434 Hirschhorn Am Neckar (DE)

(56) Entgegenhaltungen:
- CN-A- 109 886 298
- DE-U1-202011 000 875
- KR-A- 20190 070 049
- US-A- 5 764 859
- US-A1- 2013 193 123
- US-A1- 2018 322 623
- US-A1- 2020 096 970

## Beschreibung

Die Erfindung betrifft ein computerimplementiertes Verfahren zum Optimieren von Schweißparametern für eine Schweißsteuerung. Die Erfindung betrifft des Weiteren ein computerimplementiertes Verfahren zum Bereitstellen eines trainierten Algorithmus maschinellen Lernens zum Approximieren zumindest eines Qualitätskriteriums einer Schweißung eines Werkstücks. Die Erfindung betrifft darüber hinaus eine Schweißsteuerung zum Optimieren von Schweißparametern für eine Schweißung eines Werkstücks. Die Erfindung betrifft des Weiteren ein Computerprogramm und einen computerlesbaren Datenträger.

### Stand der Technik

Aktuell werden Schweißparameter in einer Schweißsteuerung von einem Benutzer eingestellt bzw. sind werksseitig in der Schweißsteuerung voreingestellt. Eine Parameteroptimierung kann nur manuell vom Benutzer erfolgen, was in der Praxis viele Trial-and-Error Versuche bedingt. Aufgrund einer Zeitvarianz des Systemverhaltens, z.B. wegen starkem Verschleiß der Elektroden, kann sich die optimale Parameterwahl mit der Zeit zudem ändern. Das Widerstandsschweißen dient üblicherweise zur Herstellung einer Verbindung zwischen zwei Blechen bzw. Metallteilen. Eine Widerstandsschweißvorrichtung weist dafür zwei Schweißelektroden auf, zwischen denen ein Schweißstrom fließt. Dabei werden beim Punktschweißen im Karosserierohbau üblicherweise Ströme von 5 kA bis einige 50 kA bei Schweißspannungen im Bereich von 1 bis 2,5 V verwendet. Im Feinpunktschweißen werden auch kleinere Ströme ab 1 kA verwendet.

Bei den zu verbindenden Teilen kann es sich sowohl um Bleche gleicher als auch um Bleche unterschiedlicher Metallart und Dicke handeln. Die einzelnen Schweißvorgänge finden dabei in Zeitfenstern im Bereich von bis zu einer Sekunde statt. Es sind jedoch auch längere Zeiten möglich. Beispielsweise werden im Zuge des automatisierten Karosserierohbaus durch robotergeführte Schweißwerkzeuge unterschiedliche Werkstücke, z.B. Bleche, mittels Widerstandsschweißen miteinander verschweißt.

KR 2019 0070049 A offenbart den Oberbegriff der Ansprüche 1, 5 und 7.

Aus dem Stand der Technik, zum Beispiel der Offenlegung DE 103 34 478 A1, ist eine sogenannte adaptive Schweißregelung bekannt. Bei einer adaptiven Schweißregelung wird in der Schweißsteuerung mithilfe der elektrischen Größen die Prozessimpedanz bestimmt und mit einer hinterlegten oder extern zugeführten Soll-Impedanz verglichen. Abhängig vom Vergleich der Impedanzen steuert ein als Prozessregler bezeichneter Regler den Schweißprozess.

Trotz adaptiver Schweißregelung kann es Anwendungsfälle geben, bei denen die Qualität der Schweißpunkte basierend auf voreingestellten Schweißparametern nicht stabil ist. Dies trifft insbesondere auf das Verschweißen von Aluminium Blechkombinationen mit variierenden Blechdicken zu, weil aufgrund der hohen spezifischen Leitfähigkeit von Aluminiumlegierungen die Wärmeumsetzung sehr gering und der Nebenschlusseinfluss groß ist. Problematisch ist auch das Verschweißen von Blechkombinationen aus verzinktem Stahl.

CN 109886298 A offenbart ein auf einem neuronalen Faltungsnetzwerk basierendes Verfahren zur Erkennung der Schweißnahtqualität. Das Verfahren umfasst eine Bilderfassung, gekennzeichnet durch die Erfassung eines Schweißpunktbildes und die Aufzeichnung einer Erfassungszeitmarkierungsfunktion und einer Schweißnahtinformationsaufzeichnungsfunktion.

US 2018/322623 A1 offenbart ein Verfahren zum Erkennen von Defekten in Objekten, umfassend: Steuern einer oder mehrerer Tiefenkameras durch einen Prozessor, um eine Vielzahl von Tiefenbildern eines Zielobjekts zu erfassen; Berechnen eines dreidimensionalen (3-D) Modells des Zielobjekts unter Verwendung der Tiefenbilder durch den Prozessor; Darstellen einer oder mehrerer Ansichten des 3-D Modells durch den Prozessor; Berechnen eines Deskriptors durch den Prozessor, indem die eine oder die mehreren Ansichten des 3D-Modells einer Faltungsstufe eines neuronalen Faltungsnetzwerks zugeführt werden; Zuführen des Deskriptors durch den Prozessor zu einem Fehlerdetektor, um eine oder mehrere Fehlerklassifikationen des Zielobjekts zu berechnen; und Ausgeben der einen oder mehreren Fehlerklassifikationen des Zielobjekts.

US 5764859 A offenbart eine Vorrichtung zur Inspektion eines elektrischen Widerstandsschweißzustands, die eine erste Elektrode, die mit einer Stromquelle verbunden ist, eine zweite Elektrode, die mit einem anderen Anschluss der Stromquelle verbunden ist, und ein Schweißobjekt umfasst, das zwischen der ersten und der zweiten Elektrode angeordnet ist.

US 2020/096970 A1 offenbart Verfahren zur Steuerung von Freiform-Abscheidungsprozessen oder Fügeprozessen, die Algorithmen des maschinellen Lernens nutzen, um die Herstellungsergebnisse zu verbessern.

DE 2020/11000875 U offenbart eine Kontrolleinrichtung für die Prozessqualität bei der Bearbeitung von Werkstücken, insbesondere beim elektrischen Widerstandspunktschweißen, wobei die Kontrolleinrichtung eine Auswerteeinrichtung aufweist, welche mit einem Speicher für Prüf- und Qualitätsdaten der Bearbeitungsergebnisse und mit einer Erfassungseinrichtung für mindestens einen Prozessparameter sowie mit einer Prozessteuerung und mit einem Speicher für Prozessparameter verbindbar ist, wobei die Auswerteeinrichtung Qualitätsabweichungen erfasst und bedarfsweise Prozessparameter einstellt und/oder nachstellt.

Der Erfindung liegt somit die Aufgabe zugrunde, ein Verfahren zum Optimieren von Schweißparametern für eine Schweißsteuerung und eine entsprechende Schweißsteuerung vorzusehen, welche in der Lage ist, einen optimalen Parametersatz automatisch zu identifizieren und in die Schweißsteuerung einzuprogrammieren.

Die Aufgabe wird mit einem computerimplementierten Verfahren zum Optimieren von Schweißparametern für eine Schweißsteuerung mit den Merkmalen des Patentanspruchs 1 gelöst.

Des Weiteren wird die Aufgabe mit einem computerimplementierten Verfahren zum Bereitstellen eines trainierten Algorithmus maschinellen Lernens zum Approximieren zumindest eines Qualitätskriteriums einer Schweißung eines Werkstücks mit den Merkmalen des Patentanspruchs 5 gelöst.

Darüber hinaus wird die Aufgabe mit einer Schweißsteuerung zum Optimieren von Schweißparametern für eine Schweißung eines Werkstücks mit den Merkmalen des Patentanspruchs 7 gelöst.

Des Weiteren wird die Aufgabe mit einem Computerprogramm mit den Merkmalen des Patentanspruchs 8 und mit einem computerlesbaren Datenträger mit den Merkmalen des Patentanspruchs 9 gelöst.

### Offenbarung der Erfindung

Die vorliegende Erfindung schafft ein computerimplementiertes Verfahren zum Optimieren von Schweißparametern für eine Schweißsteuerung mit den Merkmalen des neuen Anspruchs 1.

Die vorliegende Erfindung schafft des Weiteren ein Computerimplementiertes Verfahren zum Bereitstellen eines trainierten Algorithmus maschinellen Lernens (A1) zum Approximieren zumindest eines Qualitätskriteriums einer Schweißung eines Werkstücks mit den Merkmalen des neuen Anspruchs 5.

Die vorliegende Erfindung schafft ferner eine Schweißsteuerung zum Optimieren von Schweißparametern für eine Schweißung eines Werkstücks, umfassend Mittel zum Empfangen eines ersten Datensatzes umfassend eine Mehrzahl erster Schweißparameter für die Schweißsteuerung mit den Merkmalen des neuen Anspruchs 7.

Die vorliegende Erfindung schafft des Weiteren ein Computerprogramm mit Programmcode, um das erfindungsgemäße Verfahren durchzuführen, wenn das Computerprogramm auf einem Computer ausgeführt wird.

Die vorliegende Erfindung schafft darüber hinaus einen computerlesbaren Datenträger mit Programmcode eines Computerprogramms, um das erfindungsgemäße Verfahren durchzuführen, wenn das Computerprogramm auf einem Computer ausgeführt wird.

Eine Idee der vorliegenden Erfindung ist es, durch das Trainieren und Implementieren des Algorithmus maschinellen Lernens und des Optimierungsalgorithmus eine aktive, automatisierte Optimierung von Schweißparametern für die Schweißsteuerung vorzusehen, sodass auf jeweilige individuelle Anforderungen einer jeweiligen Schweißung abgestimmte, optimierte Schweißparameter identifizierbar und verwendbar sind.

Vorteilhafte Ausführungsformen und Weiterbildungen ergeben sich aus den Unteransprüchen sowie aus der Beschreibung unter Bezugnahme auf die Figuren.

Somit können in vorteilhafter Weise optimale Schweißparameter identifiziert werden, welche ein bestmögliches Qualitätskriterium erfüllen.

Gemäß einer weiteren bevorzugten Weiterbildung ist vorgesehen, dass vor einer Schweißung die durch den Optimierungsalgorithmus berechnete Mehrzahl zweiter Schweißparameter in die Schweißsteuerung einprogrammiert werden. Somit kann jede Schweißung mit für das jeweilige Material und den jeweiligen Einsatzzweck optimalen Schweißparametern durchgeführt werden.

Gemäß einer weiteren bevorzugten Weiterbildung ist vorgesehen, dass der erste Datensatz umfassend die Mehrzahl erster Schweißparameter für die Schweißsteuerung Ist-Daten aus zumindest einer vorherigen Schweißung und Soll-Daten aus einer nächsten Schweißung umfassen. Diese Daten können sodann als Eingabedaten für den Algorithmus maschinellen Lernens zum Approximieren zumindest eines numerischen Wertes einer Zielfunktion verwendet werden.

Gemäß einer weiteren bevorzugten Weiterbildung ist vorgesehen, dass die Schweißparameter für die Schweißsteuerung einen Schweißstrom, eine Schweißspannung, eine Elektrodenkraft, einen Schweißwiderstand, eine Pulsweite des Schweißstroms und/oder ein Drehmoment einer Servozange, und materialbezogene Schweißparameter, insbesondere ein Material und/oder eine Blechdicke eines zu schweißenden Werkstücks, umfassen. Die Approximierung des Qualitätskriteriums der Schweißung bzw. die Approximierung der Schweißparameter beziehen sich somit in vorteilhafter Weise sowohl auf die entsprechenden Prozessführungsparameter als auch auf die materialbezogenen Schweißparameter. Die Schweißparameter werden somit auf die Schweißaufgabe abgestimmt, welche durch die Punktposition auf dem Bauteil, die Materialeigenschaften und die Blechgeometrie bestimmt wird.

Gemäß einer weiteren bevorzugten Weiterbildung ist vorgesehen, dass die Mehrzahl von Schweißparametern für die Schweißsteuerung des ersten Datensatzes von Eingabe-Trainingsdaten aus vorangegangenen Schweißabläufen der zumindest einen Schweißsteuerung stammen.

Somit können die Datensätze aus den vorangegangenen Schweißabläufen in vorteilhafter Weise zur Approximierung optimaler Parametersätze für zukünftige Anwendungsfälle bzw. zu schweißende Werkstücke approximiert werden. Somit können in vorteilhafter Weise optimale Schweißparameter identifiziert werden, welche ein bestmögliches Qualitätskriterium erfüllen.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: ein Ablaufdiagramm eines computerimplementierten Verfahrens zum Optimieren von Schweißparametern für eine Schweißsteuerung gemäß einer bevorzugten Ausführungsform der Erfindung;
- Fig. 2: ein Ablaufdiagramm eines Verfahrens zum Bereitstellen eines trainierten Algorithmus maschinellen Lernens zum Approximieren zumindest eines Qualitätskriteriums einer Schweißung eines Werkstücks gemäß der bevorzugten Ausführungsform der Erfindung; und
- Fig. 3: eine Schweißsteuerung zum Optimieren von Schweißparametern für eine Schweißung des Werkstücks gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

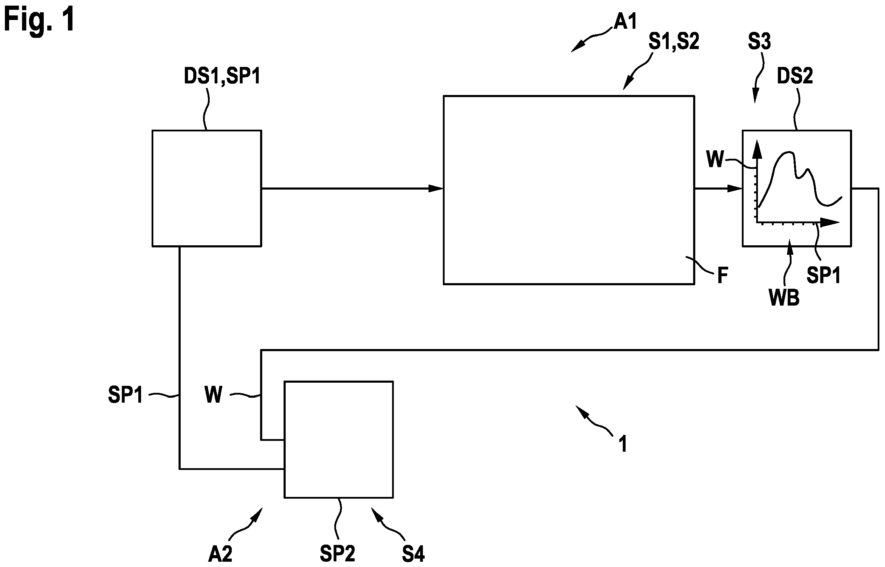

Fig. 1 zeigt ein Ablaufdiagramm eines computerimplementierten Verfahrens zum Optimieren von Schweißparametern für eine Schweißsteuerung gemäß einer bevorzugten Ausführungsform der Erfindung.

Das Verfahren umfasst ein Empfangen S1 eines ersten Datensatzes DS1 umfassend eine Mehrzahl erster Schweißparameter SP1 und dazugehöriger Werte W der Zielfunktion F für die Schweißsteuerung 1.

Die Schweißsteuerung 1 ist hierbei eine Ziel-Schweißsteuerung, auf welcher später die Schweißparameter SP1 optimiert werden sollen.

Der erste Datensatz DS1 weist vorzugsweise eine Sammlung von Daten aus verschiedenen Quellen auf, also von verschiedenen Schweißmaschinen aus Produktion und/oder Labor, die in einem Datensatz auf konsistente Art und Weise zusammengeführt wurden. Zusätzlich oder alternativ kann der erste Datensatz DS1 auch gelabelte Qualitätsdaten aus der Qualitätssicherung und/oder Simulationsdaten enthalten.

Der erste Datensatz DS1 erfüllt hierbei die folgenden Bedingungen. Eine Variation der Schweißparameter SP1, die im Zuge des vorgeschlagenen Verfahrens gemäß der Zielfunktion F optimiert werden soll sowie die entsprechende Zuordnung des numerischen Wertes W der Zielfunktion F.

Darüber hinaus umfasst das Verfahren ein Approximieren S2 zumindest eines numerischen Wertes W einer Zielfunktion F für die Mehrzahl erster Schweißparameter SP1 für die Schweißsteuerung 1 unter Verwendung eines trainierten Algorithmus maschinellen Lernens A1.

Der Algorithmus maschinellen Lernens A1 wird auf die Mehrzahl erster Schweißparameter SP1 angewendet, wobei die Zielfunktion F zumindest ein Qualitätskriterium einer Schweißung in Reaktion auf eine durch die Mehrzahl erster Schweißparameter SP erzeugten Schweißung repräsentiert.

Ferner umfasst das Verfahren ein Ausgeben S3 eines zweiten Datensatzes DS2 umfassend zumindest einen numerischen Wert W der Zielfunktion F und ein Optimieren S4 der Mehrzahl erster Schweißparameter SP1 für die Schweißsteuerung 1 durch einen Optimierungsalgorithmus A2, welcher unter Verwendung des ersten Datensatzes DS1 umfassend die Mehrzahl erster Schweißparameter SP1 für die Schweißsteuerung 1 und des approximierten numerischen Wertes W der Zielfunktion F eine optimierte Mehrzahl zweiter Schweißparameter SP2 für die Schweißsteuerung 1 berechnet.

Der Optimierungsalgorithmus A2 verwendet entsprechend der Erfindung ein Gradientenverfahren, be welchem ein Extremwert, insbesondere ein Maximum, des numerischen Wertes W der Zielfunktion F auf einer durch einen Definitionsbereich der Mehrzahl von Schweißparametern SP in Funktion eines numerischen Wertebereichs WB der Zielfunktion F gebildeten Hyperfläche bestimmt wird. Alternativ können beispielsweise andere bekannte Optimierungsalgorithmus Anwendung finden.

Vor einer Schweißung werden die durch den Optimierungsalgorithmus A2 berechnete Mehrzahl zweiter Schweißparameter SP2 in die Schweißsteuerung 1 einprogrammiert.

Der erste Datensatz DS1 umfassend die Mehrzahl erster Schweißparameter SP1 für die Schweißsteuerung 1 weist Ist-Daten aus zumindest einer vorherigen Schweißung und Soll-Daten aus einer nächsten Schweißung auf.

Die ersten und zweiten Schweißparameter SP1, SP2 für die Schweißsteuerung 1 sind entsprechend der Erfindung Prozessführungsparameter, insbesondere ein Schweißstrom, eine Schweißspannung, eine Elektrodenkraft, ein Schweißwiderstand, eine Pulsweite des Schweißstroms und/oder ein Drehmoment einer Servozange, und materialbezogene Schweißparameter, insbesondere ein Material und/oder eine Blechdicke eines zu schweißenden Werkstücks.

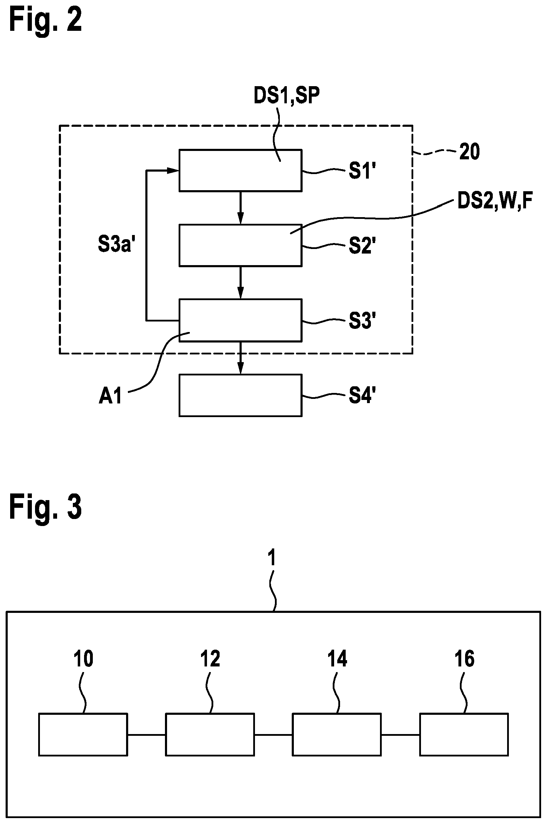

Fig. 2 zeigt ein Ablaufdiagramm eines Verfahrens zum Bereitstellen eines trainierten Algorithmus maschinellen Lernens zum Approximieren zumindest eines Qualitätskriteriums einer Schweißung eines Werkstücks gemäß der bevorzugten Ausführungsform der Erfindung.

Das Verfahren umfasst ein Empfangen S1` eines ersten Datensatzes DS1 von Eingabe-Trainingsdaten umfassend eine Mehrzahl erster Schweißparameter SP1 für die Schweißsteuerung 1 und ein Empfangen S2' eines zweiten Datensatzes DS2 von Ausgabe-Trainingsdaten umfassend einen numerischen Wert W einer Zielfunktion F, wobei die Ausgabe-Trainingsdaten mit den Eingabe-Trainingsdaten in Beziehung stehen.

Das Verfahren umfasst ferner ein Trainieren S3' des Algorithmus maschinellen Lernens A1 zum Approximieren des numerischen Wertes W der Zielfunktion F für die Mehrzahl erster Schweißparameter SP1 für die Schweißsteuerung 1, wobei die Zielfunktion F zumindest ein Qualitätskriterium einer Schweißung in Reaktion auf eine durch die Mehrzahl erster Schweißparametern SP1 erzeugten Schweißung repräsentiert, basierend auf den Eingabe-Trainingsdaten und den Ausgabe-Trainingsdaten mit einer Trainingsberechnungseinheit 20.

Das Verfahren umfasst darüber hinaus ein Bereitstellen S4' des trainierten Algorithmus maschinellen Lernens A1 zum Approximieren des zumindest eines Qualitätskriteriums der Schweißung des Werkstücks.

Die Mehrzahl erster Schweißparameter SP1 für die Schweißsteuerung 1 des ersten Datensatzes DS1 stammen von Eingabe-Trainingsdaten aus vorangegangenen Schweißabläufen der zumindest einen Schweißsteuerung 1.

Der Algorithmus maschinellen Lernens A1 wird durch Gewichtungseinstellungen des ersten Datensatzes DS1 von Eingabe-Trainingsdaten unter Verwendung eines Gradientenverfahrens S3a', insbesondere durch Identifizieren eines Maximums des numerischen Wertes W der Zielfunktion F auf einer durch einen Definitionsbereich der Mehrzahl von Schweißparametern SP in Funktion eines numerischen Wertebereichs WB der Zielfunktion F gebildeten Hyperfläche trainiert.

Fig. 3 zeigt eine Schweißsteuerung zum Optimieren von Schweißparametern für eine Schweißung des Werkstücks gemäß der bevorzugten Ausführungsform der Erfindung.

Die Schweißsteuerung 1 umfasst Mittel 10 zum Empfangen S1 eines ersten Datensatzes DS1 umfassend eine Mehrzahl erster Schweißparameter SP1 für die Schweißsteuerung 1 und Mittel 12 zum Approximieren S2 zumindest eines numerischen Wertes W einer Zielfunktion F für die Mehrzahl erster Schweißparameter SP1 für die Schweißsteuerung 1 unter Verwendung eines trainierten Algorithmus maschinellen Lernens A1, welcher dazu eingerichtet ist, auf die Mehrzahl erster Schweißparameter SP1 angewendet zu werden, wobei die Zielfunktion F zumindest ein Qualitätskriterium einer Schweißung in Reaktion auf eine durch die Mehrzahl erster Schweißparameter SP erzeugten Schweißung repräsentiert.

Die Schweißsteuerung 1 umfasst Mittel 14 zum Bereitstellen eines zweiten Datensatzes DS2 umfassend den zumindest einen numerischen Wert W der Zielfunktion F.

Die Schweißsteuerung 1 umfasst darüber hinaus Mittel 16 zum Optimieren S4 der Mehrzahl erster Schweißparameter SP1 für die Schweißsteuerung 1 durch einen Optimierungsalgorithmus A2, welcher dazu eingerichtet ist, unter Verwendung des ersten Datensatzes DS1 umfassend die Mehrzahl erster Schweißparameter SP1 für die Schweißsteuerung 1 und des approximierten numerischen Wertes W der Zielfunktion F eine optimierte Mehrzahl zweiter Schweißparameter SP2 für die Schweißsteuerung 1 zu berechnen.

## Patentansprüche

1. Computerimplementiertes Verfahren zum Optimieren von Schweißparametern (SP1, SP2) für eine Schweißsteuerung (1), mit den Schritten:
Empfangen (S1) eines ersten Datensatzes (DS1) umfassend eine Mehrzahl erster Schweißparameter (SP1) für die Schweißsteuerung (1); wobei die Schweißparameter (SP1) Prozessführungsparameter sind;
**gekennzeichnet durch**:
Approximieren (S2) zumindest eines numerischen Wertes (W) einer Zielfunktion (F) für die Mehrzahl erster Schweißparameter (SP1) für die Schweißsteuerung (1) unter Verwendung eines trainierten Algorithmus maschinellen Lernens (A1), welcher auf die Mehrzahl erster Schweißparameter (SP1) angewendet wird, wobei die Zielfunktion (F) zumindest ein Qualitätskriterium einer Schweißung in Reaktion auf eine durch die Mehrzahl erster Schweißparameter (SP1) erzeugten Schweißung repräsentiert;
Ausgeben (S3) eines zweiten Datensatzes (DS2) umfassend zumindest einen numerischen Wert (W) der Zielfunktion (F); und
Optimieren (S4) der Mehrzahl erster Schweißparameter (SP1) für die Schweißsteuerung (1) durch einen Optimierungsalgorithmus (A2), welcher unter Verwendung des ersten Datensatzes (DS1) umfassend die Mehrzahl erster Schweißparameter (SP1) für die Schweißsteuerung (1) und des approximierten numerischen Wertes (W) der Zielfunktion (F) eine optimierte Mehrzahl zweiter Schweißparameter (SP2) für die Schweißsteuerung (1) berechnet, wobei die Schweißparameter (SP2) Prozessführungsparameter sind; wobei der Optimierungsalgorithmus (A2) ein Gradientenverfahren verwendet, bei welchem ein Extremwert, insbesondere ein Maximum, des numerischen Wertes (W) der Zielfunktion (F) auf einer durch einen Definitionsbereich der Mehrzahl erster Schweißparametern (SP1) in Funktion eines numerischen Wertebereichs (WB) der Zielfunktion (F) gebildeten Hyperfläche bestimmt wird.

2. Computerimplementiertes Verfahren nach Anspruch 1, **dadurch gekennzeichnet, dass** vor einer Schweißung die durch den Optimierungsalgorithmus (A2) berechnete Mehrzahl zweiter Schweißparameter (SP2) in die Schweißsteuerung (1) einprogrammiert werden.

3. Computerimplementiertes Verfahren nach Anspruch 2, **dadurch gekennzeichnet, dass** der erste Datensatz (DS1) umfassend die Mehrzahl erster Schweißparameter (SP1) für die Schweißsteuerung (1) Ist-Daten aus zumindest einer vorherigen Schweißung und Soll-Daten aus einer nächsten Schweißung umfassen.

4. Computerimplementiertes Verfahren nach Anspruch 1, **dadurch gekennzeichnet, dass** die ersten und zweiten Schweißparameter (SP1, SP2) für die Schweißsteuerung (1) einen Schweißstrom, eine Schweißspannung, eine Elektrodenkraft, einen Schweißwiderstand, eine Pulsweite des Schweißstroms und/oder ein Drehmoment einer Servozange, und materialbezogene Schweißparameter, insbesondere ein Material und/oder eine Blechdicke eines zu schweißenden Werkstücks umfassen.

5. Computerimplementiertes Verfahren zum Bereitstellen eines trainierten Algorithmus maschinellen Lernens (A1) zum Approximieren zumindest eines Qualitätskriteriums einer Schweißung eines Werkstücks, mit den Schritten:
Empfangen (S1') eines ersten Datensatzes (DS1) von Eingabe-Trainingsdaten umfassend eine Mehrzahl erster Schweißparameter (SP1) für die Schweißsteuerung (1); wobei die Schweißparameter (SP1) Prozessführungsparameter sind;
**gekennzeichnet durch**:
Empfangen (S2') eines zweiten Datensatzes (DS2) von Ausgabe-Trainingsdaten umfassend einen numerischen Wert (W) einer Zielfunktion (F), wobei die Ausgabe-Trainingsdaten mit den Eingabe-Trainingsdaten in Beziehung stehen;
Trainieren (S3') des Algorithmus maschinellen Lernens (A1) zum Approximieren des numerischen Wertes (W) der Zielfunktion (F) für die Mehrzahl erster Schweißparameter (SP1) für die Schweißsteuerung (1), wobei die Zielfunktion (F) zumindest ein Qualitätskriterium einer Schweißung in Reaktion auf eine durch die Mehrzahl erster Schweißparametern (SP1) erzeugten Schweißung repräsentiert, basierend auf den Eingabe-Trainingsdaten und den Ausgabe-Trainingsdaten mit einer Trainingsberechnungseinheit (20); und
Bereitstellen (S4') des trainierten Algorithmus maschinellen Lernens (A1) zum Approximieren des zumindest eines Qualitätskriteriums der Schweißung des Werkstücks, wobei der Algorithmus maschinellen Lernens (A1) durch Gewichtungseinstellungen des ersten Datensatzes (DS1) von Eingabe-Trainingsdaten unter Verwendung eines Gradientenverfahrens (S3a'), insbesondere durch Identifizieren eines Maximums des numerischen Wertes (W) der Zielfunktion (F) auf einer durch einen Definitionsbereich der Mehrzahl erster Schweißparametern (SP1) in Funktion eines numerischen Wertebereichs (WB) der Zielfunktion (F) gebildeten Hyperfläche trainiert wird.

6. Computerimplementiertes Verfahren nach Anspruch 5, **dadurch gekennzeichnet, dass** die Mehrzahl erster Schweißparameter (SP1) für die Schweißsteuerung (1) des ersten Datensatzes (DS1) von Eingabe-Trainingsdaten aus vorangegangenen Schweißabläufen der zumindest einen Schweißsteuerung (1) stammen.

7. Schweißsteuerung (1) zum Optimieren von Schweißparametern (SP1, SP2) für eine Schweißung eines Werkstücks, umfassend:
Mittel (10) zum Empfangen (S1) eines ersten Datensatzes (DS1) umfassend eine Mehrzahl erster Schweißparameter (SP1) für die Schweißsteuerung (1);
wobei die Schweißparameter (SP1) Prozessführungsparameter sind;
**gekennzeichnet durch**:
Mittel (12) zum Approximieren (S2) zumindest eines numerischen Wertes (W) einer Zielfunktion (F) für die Mehrzahl erster Schweißparameter (SP1) für die Schweißsteuerung (1) unter Verwendung eines trainierten Algorithmus maschinellen Lernens (A1), welcher dazu eingerichtet ist, auf die Mehrzahl erster Schweißparameter (SP1) angewendet zu werden, wobei die Zielfunktion (F) zumindest ein Qualitätskriterium einer Schweißung in Reaktion auf eine durch die Mehrzahl erster Schweißparameter (SP1) erzeugten Schweißung repräsentiert;
Mittel (14) zum Bereitstellen eines zweiten Datensatzes (DS2) umfassend den zumindest einen numerischen Wert (W) der Zielfunktion (F); und
Mittel (16) zum Optimieren (S4) der Mehrzahl erster Schweißparameter (SP1) für die Schweißsteuerung (1) durch einen Optimierungsalgorithmus (A2), welcher dazu eingerichtet ist, unter Verwendung des ersten Datensatzes (DS1) umfassend die Mehrzahl erster Schweißparameter (SP1) für die Schweißsteuerung (1) und des approximierten numerischen Wertes (W) der Zielfunktion (F) eine optimierte Mehrzahl zweiter Schweißparameter (SP2) für die Schweißsteuerung (1) zu berechnen, wobei die Schweißparameter (SP2) Prozessführungsparameter sind; wobei der Optimierungsalgorithmus (A2) dazu eingerichtet ist, ein Gradientenverfahren zu verwenden, bei welchem ein Extremwert, insbesondere ein Maximum, des numerischen Wertes (W) der Zielfunktion (F) auf einer durch einen Definitionsbereich der Mehrzahl erster Schweißparametern (SP1) in Funktion eines numerischen Wertebereichs (WB) der Zielfunktion (F) gebildeten Hyperfläche bestimmbar ist.

8. Computerprogramm mit Programmcode, um das Verfahren nach einem der Ansprüche 1 bis 4 durchzuführen, wenn das Computerprogramm auf einem Computer ausgeführt wird.

9. Computerlesbarer Datenträger mit Programmcode eines Computerprogramms, um das Verfahren nach einem der Ansprüche 1 bis 4 durchzuführen, wenn das Computerprogramm auf einem Computer ausgeführt wird.

## Claims

1. Computer-implemented method for optimizing welding parameters (SP1, SP2) for a welding controller (1), having the following steps:
receiving (S1) a first dataset (DS1) comprising a plurality of first welding parameters (SP1) for the welding controller (1); wherein the welding parameters (SP1) are process control parameters;
**characterized by**:
approximating (S2) at least one numerical value (W) of an objective function (F) for the plurality of first welding parameters (SP1) for the welding controller (1) using a trained machine learning algorithm (A1), which is applied to the plurality of first welding parameters (SP1), wherein the objective function (F) represents at least one quality criterion of a welding operation in response to a weld produced by the plurality of first welding parameters (SP1);
outputting (S3) a second dataset (DS2) comprising at least one numerical value (W) of the objective function (F); and
optimizing (S4) the plurality of first welding parameters (SP1) for the welding controller (1) by way of an optimization algorithm (A2) that uses the first dataset (DS1) comprising the plurality of first welding parameters (SP1) for the welding controller (1) and the approximated numerical value (W) of the objective function (F) to calculate an optimized plurality of second welding parameters (SP2) for the welding controller (1), wherein the welding parameters (SP2) are process control parameters;
wherein the optimization algorithm (A2) uses a gradient method in which an extreme value, in particular a maximum, of the numerical value (W) of the objective function (F) is determined on a hypersurface formed by a definition range of the plurality of first welding parameters (SP1) as a function of a numerical value range (WB) of the objective function (F).

2. Computer-implemented method according to Claim 1, **characterized in that**, prior to a welding operation, the plurality of second welding parameters (SP2) calculated by the optimization algorithm (A2) are programmed into the welding controller (1).

3. Computer- implemented method according to Claim 2, **characterized in that** the first dataset (DS1) comprising the plurality of first welding parameters (SP1) for the welding controller (1) comprises actual data from at least one previous welding operation and target data from a following welding operation.

4. Computer- implemented method according to Claim 1, **characterized in that** the first and second welding parameters (SP1, SP2) for the welding controller (1) comprise a welding current, a welding voltage, an electrode force, a welding resistance, a pulse width of the welding current and/or a torque of a servo gun, and material-related welding parameters, in particular a material and/or a sheet thickness of a workpiece to be welded.

5. Computer-implemented method for providing a trained machine learning algorithm (A1) for approximating at least one quality criterion of a welding operation on a workpiece, having the following steps:
receiving (S1') a first dataset (DS1) of input training data comprising a plurality of first welding parameters (SP1) for the welding controller (1), wherein the welding parameters (SP1) are process control parameters;
**characterized by**:
receiving (S2') a second dataset (DS2) of output training data comprising a numerical value (W) of an objective function (F), wherein the output training data are correlated with the input training data;
training (S3') the machine learning algorithm (A1) to approximate the numerical value (W) of the objective function (F) for the plurality of first welding parameters (SP1) for the welding controller (1), wherein the objective function (F) represents at least one quality criterion of a welding operation in response to a weld produced by the plurality of first welding parameters (SP1), based on the input training data and the output training data with a training calculation unit (20); and
providing (S4') the trained machine learning algorithm (A1) for approximating the at least one quality criterion of the welding operation on the workpiece, wherein the machine learning algorithm (A1) is trained by weightings settings of the first dataset (DS1) of input training data using a gradient method (S3a'), in particular by identifying a maximum of the numerical value (W) of the objective function (F) on a hypersurface formed by a definition range of the plurality of first welding parameters (SP1) as a function of a numerical value range (WB) of the objective function (F).

6. Computer-implemented method according to Claim 5, **characterized in that** the plurality of first welding parameters (SP1) for the welding controller (1) of the first dataset (DS1) of input training data stem from previous welding sequences of the at least one welding controller (1).

7. Welding controller (1) for optimizing welding parameters (SP1, SP2) for a welding operation on a workpiece, comprising:
means (10) for receiving (S1) a first dataset (DS1) comprising a plurality of first welding parameters (SP1) for the welding controller (1); wherein the welding parameters (SP1) are process control parameters;
**characterized by**:
means (12) for approximating (S2) at least one numerical value (W) of an objective function (F) for the plurality of first welding parameters (SP1) for the welding controller (1) using a trained machine learning algorithm (A1), which is designed to be applied to the plurality of first welding parameters (SP1), wherein the objective function (F) represents at least one quality criterion of a welding operation in response to a weld produced by the plurality of first welding parameters (SP1);
means (14) for providing a second dataset (DS2) comprising the at least one numerical value (W) of the objective function (F); and
means (16) for optimizing (S4) the plurality of first welding parameters (SP1) for the welding controller (1) by way of an optimization algorithm (A2) that is designed, using the first dataset (DS1) comprising the plurality of first welding parameters (SP1) for the welding controller (1) and the approximated numerical value (W) of the objective function (F), to calculate an optimized plurality of second welding parameters (SP2) for the welding controller (1), wherein the welding parameters (SP2) are process control parameters;
wherein the optimization algorithm (A2) is designed to use a gradient method in which an extreme value, in particular a maximum, of the numerical value (W) of the objective function (F) is able to be determined on a hypersurface formed by a definition range of the plurality of first welding parameters (SP1) as a function of a numerical value range (WB) of the objective function (F) .

8. Computer program containing program code for performing the method according to one of Claims 1 to 4 when the computer program is executed on a computer.

9. Computer-readable data carrier containing program code of a computer program for performing the method according to one of Claims 1 to 4 when the computer program is executed on a computer.

## Revendications

1. Procédé mis en œuvre par ordinateur pour optimiser des paramètres de soudage (SP1, SP2) pour une commande de soudage (1), comprenant les étapes consistant à :
recevoir (S1) un premier jeu de données (DS1) comprenant une pluralité de premiers paramètres de soudage (SP1) pour la commande de soudage (1) ; les paramètres de soudage (SP1) étant des paramètres de gestion de processus ;
**caractérisé par** les étapes consistant à :
approximer (S2) au moins une valeur numérique (W) d'une fonction cible (F) pour la pluralité de premiers paramètres de soudage (SP1) pour la commande de soudage (1) en utilisant un algorithme entraîné d'apprentissage machine (A1) qui est appliqué à la pluralité de premiers paramètres de soudage (SP1), dans lequel la fonction cible (F) représente au moins un critère de qualité d'un soudage en réaction à un soudage produit par la pluralité de premiers paramètres de soudage (SP1) ;
sortir (S3) un deuxième jeu de données (DS2) comprenant au moins une valeur numérique (W) de la fonction cible (F) ; et
optimiser (S4) la pluralité de premiers paramètres de soudage (SP1) pour la commande de soudage (1) par un algorithme d'optimisation (A2) qui calcule en utilisant le premier jeu de données (DS1) comprenant la pluralité de premiers paramètres de soudage (SP1) pour la commande de soudage (1) et la valeur numérique approximée (W) de la fonction cible (F) une pluralité optimisée de deuxièmes paramètres de soudage (SP2) pour la commande de soudage (1), les paramètres de soudage (SP2) étant des paramètres de gestion de processus ; dans lequel l'algorithme d'optimisation (A2) utilise une méthode du gradient dans laquelle une valeur extrême, en particulier un maximum, de la valeur numérique (W) de la fonction cible (F) est déterminée sur une hypersurface formée par un domaine de définition de la pluralité de premiers paramètres de soudage (SP1) en fonction d'une plage de valeurs numériques (WB) de la fonction cible (F).

2. Procédé mis en œuvre par ordinateur selon la revendication 1, **caractérisé en ce qu'**avant un soudage, la pluralité de deuxièmes paramètres de soudage (SP2) calculée par l'algorithme d'optimisation (A2) est programmée dans la commande de soudage (1).

3. Procédé mis en œuvre par ordinateur selon la revendication 2, **caractérisé en ce que** le premier jeu de données (DS1) comprenant la pluralité de premiers paramètres de soudage (SP1) pour la commande de soudage (1) comprend des données réelles issues d'au moins un soudage antérieur et des données de consigne issues d'un soudage suivant.

4. Procédé mis en œuvre par ordinateur selon la revendication 1, **caractérisé en ce que** les premiers et les deuxièmes paramètres de soudage (SP1, SP2) pour la commande de soudage (1) comprennent un courant de soudage, une tension de soudage, une force d'électrode, une résistance de soudage, une largeur d'impulsion du courant de soudage et/ou un couple d'une pince asservie, et des paramètres de soudage liés au matériau, en particulier un matériau et/ou une épaisseur de tôle d'une pièce à souder.

5. Procédé mis en œuvre par ordinateur pour fournir un algorithme entraîné d'apprentissage machine (A1) pour approximer au moins un critère de qualité d'un soudage d'une pièce, comprenant les étapes consistant à :
recevoir (S1') un premier jeu de données (DS1) de données d'entraînement d'entrée comprenant une pluralité de premiers paramètres de soudage (SP1) pour la commande de soudage (1) ; les paramètres de soudage (SP1) étant des paramètres de gestion de processus ;
**caractérisé par** les étapes consistant à :
recevoir (S2') un deuxième jeu de données (DS2) de données d'entraînement de sortie comprenant une valeur numérique (W) d'une fonction cible (F), dans lequel les données d'entraînement de sortie sont en corrélation avec les données d'entraînement d'entrée ;
entraîner (S3') l'algorithme d'apprentissage machine (A1) pour approximer la valeur numérique (W) de la fonction cible (F) pour la pluralité de premiers paramètres de soudage (SP1) pour la commande de soudage (1), dans lequel la fonction cible (F) représente au moins un critère de qualité d'un soudage en réaction à un soudage produit par la pluralité de premiers paramètres de soudage (SP1), sur la base des données d'entraînement d'entrée et des données d'entraînement de sortie avec une unité de calcul d'entraînement (20) ; et
fournir (S4') l'algorithme entraîné d'apprentissage machine (A1) pour approximer ledit au moins un critère de qualité du soudage de la pièce, dans lequel l'algorithme d'apprentissage machine (A1) est entraîné par des réglages de pondération du premier jeu de données (DS1) de données d'apprentissage d'entrée en utilisant une méthode du gradient (S3a'), en particulier en identifiant un maximum de la valeur numérique (W) de la fonction cible (F) sur une hypersurface formée par un domaine de définition de la pluralité de premiers paramètres de soudage (SP1) en fonction d'une plage de valeurs numériques (WB) de la fonction cible (F).

6. Procédé mis en œuvre par ordinateur selon la revendication 5, **caractérisé en ce que** la pluralité de premiers paramètres de soudage (SP1) pour la commande de soudage (1) du premier jeu de données (DS1) provient de données d'entraînement d'entrée de séquences de soudage précédentes de ladite au moins une commande de soudage (1).

7. Commande de soudage (1) pour optimiser des paramètres de soudage (SP1, SP2) pour un soudage d'une pièce, comprenant :
des moyens (10) pour recevoir (S1) un premier jeu de données (DS1) comprenant une pluralité de premiers paramètres de soudage (SP1) pour la commande de soudage (1) ;
les paramètres de soudage (SP1) étant des paramètres de gestion de processus ;
**caractérisée par** :
des moyens (12) pour approximer (S2) au moins une valeur numérique (W) d'une fonction cible (F) pour la pluralité de premiers paramètres de soudage (SP1) pour la commande de soudage (1) en utilisant un algorithme entraîne d'apprentissage machine (A1) qui est conçu pour être appliqué à la pluralité de premiers paramètres de soudage (SP1), dans laquelle la fonction cible (F) représente au moins un critère de qualité d'un soudage en réaction à un soudage produit par la pluralité de premiers paramètres de soudage (SP1) ;
des moyens (14) pour fournir un deuxième jeu de données (DS2) comprenant ladite au moins une valeur numérique (W) de la fonction cible (F) ; et
des moyens (16) pour optimiser (S4) la pluralité de premiers paramètres de soudage (SP1) pour la commande de soudage (1) par un algorithme d'optimisation (A2) qui est conçu, en utilisant le premier jeu de données (DS1) comprenant la pluralité de premiers paramètres de soudage (SP1) pour la commande de soudage (1) et la valeur numérique approximée (W) de la fonction cible (F), pour calculer une pluralité optimisée de deuxièmes paramètres de soudage (SP2) pour la commande de soudage (1), les paramètres de soudage (SP2) étant des paramètres de gestion de processus ; dans laquelle l'algorithme d'optimisation (A2) est conçu pour utiliser une méthode du gradient dans laquelle une valeur extrême, en particulier un maximum, de la valeur numérique (W) de la fonction cible (F) peut être déterminée sur une hypersurface formée par un domaine de définition de la pluralité de premiers paramètres de soudage (SP1) en fonction d'une plage de valeurs numériques (WB) de la fonction cible (F).

8. Programme informatique comprenant du code programme pour exécuter le procédé selon l'une quelconque des revendications 1 à 4 lorsque le programme informatique est exécuté sur un ordinateur.

9. Support de données lisible par ordinateur, comprenant du code programme d'un programme informatique pour exécuter le procédé selon l'une quelconque des revendications 1 à 4 lorsque le programme informatique est exécuté sur un ordinateur.
